# EUROPEAN PATENT APPLICATION

(11) **EP 4 589 684 A1**
(43) Date of publication of application: **23.07.2025**
(21) Application number: 24215037.3
(22) Date of filing: 25.11.2024
(51) Int. Cl.: H01M 4/36, H01M 4/525

(54) **POSITIVE ELECTRODE ACTIVE MATERIAL AND NON-AQUEOUS ELECTROLYTE SECONDARY BATTERY**

(30) Priority: 11.01.2024 JP 2024002594
(71) Applicant: Prime Planet Energy & Solutions, Inc., Chuo-ku, Tokyo 103-0022 (JP)
(72) Inventor: SAITO, Masaya, Tokyo, 103-0022 (JP)
(74) Representative: Kuhnen & Wacker Patent- und Rechtsanwaltsbüro PartG mbB

(57) **Abstract**

A positive electrode active material comprises a first active material, and a second active material having a greater average particle size than the first active material. Each of the first active material and the second active material is a lithium-(transition metal) composite oxide. The first active material is a single particle, or a secondary particle consisting of 2 to 10 primary particles aggregated together. The second active material is a secondary particle consisting of at least 50 primary particles aggregated together. A ratio (R/D₁50) of an average particle size (R) of the single particle or the primary particle of the first active material determined in a scanning electron microscope image to an average particle size (Di50) of the first active material is 0.80 or more. An intensity ratio (I₀₀₃/I₁₀₄) of diffraction peaks of the first active material obtained by an X-ray diffraction method is 1.6 or more.

## Description

### CROSS REFERENCE TO RELATED APPLICATIONS

This nonprovisional application is based on Japanese Patent Application No. 2024-002594 filed on January 11, 2024, with the Japan Patent Office, the entire contents of which are hereby incorporated by reference.

### BACKGROUND OF THE INVENTION

### Field of the Invention

The present invention relates to a positive electrode active material and a non-aqueous electrolyte secondary battery.

### Description of the Background Art

In non-aqueous electrolyte secondary batteries such as lithium-ion secondary batteries, it is known to use a lithium-(transition metal) composite oxide as a positive electrode active material in an active material layer of a positive electrode. As an active material in an active material layer of a positive electrode, a mixture of two types of active materials with different particle sizes is sometimes used (Japanese Patent Laying-Open No. 2011-113825, for example). As an active material in a positive electrode, it is also known to use a single particle and a particle consisting of a small number of primary particles aggregated together (hereinafter also called "a single particle and the like") (Japanese Patent Laying-Open No. 2017-188445, for example).

### SUMMARY OF THE INVENTION

Due to the small particle size and the irregular particle shape, a single particle and the like tend to have poor fluidity. In the case to form an active material layer by mixing two types of active materials with different particle sizes, an active material with poor fluidity may cause an impairment of packing properties of the active material layer. To enhance the packing properties of an active material layer, it is possible to enhance fluidity of a single particle and the like. However, when an active material layer that includes two types of active materials with different particle sizes is formed with the use of a single particle and the like with excellent fluidity, output properties of the non-aqueous electrolyte secondary battery are sometimes degraded.

The present disclosure aims at providing a positive electrode active material that is capable of enhancing output properties of the non-aqueous electrolyte secondary battery while enhancing fluidity of a first active material, which is a single particle or a secondary particle consisting of 2 to 10 primary particles aggregated together, as well as a non-aqueous electrolyte secondary battery including the same.
[1] A positive electrode active material comprising:
   a first active material; and
   a second active material having a greater average particle size than the first active material, wherein
   each of the first active material and the second active material is a lithium-(transition metal) composite oxide,
   the first active material is a single particle, or a secondary particle consisting of 2 to 10 primary particles aggregated together,
   the second active material is a secondary particle consisting of at least 50 primary particles aggregated together,
   a ratio (R/D₁50) of an average particle size (R) of the single particle or the primary particle of the first active material determined in a scanning electron microscope image to an average particle size (D₁50) of the first active material is 0.80 or more, and
   an intensity ratio (I₀₀₃/I₁₀₄) of diffraction peaks of the first active material obtained by an X-ray diffraction method is 1.6 or more.
[2] The positive electrode active material according to [1], wherein the ratio (R/D₁50) is 0.84 or more.
[3] The positive electrode active material according to [1] or [2], wherein the intensity ratio (I₀₀₃/I₁₀₄) is 1.7 or more.
[4] The positive electrode active material according to any one of [1] to [3], wherein the average particle size (D₁50) of the first active material is from 2 to 6 µm.
[5] The positive electrode active material according to any one of [1] to [4], wherein an average particle size (D₂50) of the second active material is from 12 to 20 µm.
[6] The positive electrode active material according to any one of [1] to [5], wherein a ratio of the average particle size (D₁50) of the first active material to an average particle size (D₂50) of the second active material (D₁50:D₂50) is from 1:2 to 1:10.
[7] The positive electrode active material according to any one of [1] to [6], wherein a specific surface area of the second active material is from 0.13 to 0.27 m²/g.
[8] The positive electrode active material according to any one of [1] to [7], wherein each of the first active material and the second active material is a lithium-(transition metal) composite oxide including Ni at 50 to 70 mol % relative to a total number of moles of metallic element except Li.
[9] A non-aqueous electrolyte secondary battery comprising:
   a positive electrode, wherein
   the positive electrode has an active material layer including the positive electrode active material according to any one of [1] to [8].

The foregoing and other objects, features, aspects and advantages of the present invention will become more apparent from the following detailed description of the present invention.

### DESCRIPTION OF THE PREFERRED EMBODIMENTS

Herein, a numerical range such as "from x to y" includes the upper limit and the lower limit, unless otherwise specified. That is, "from x to y" means a numerical range of "not less than x and not more than y". Any numerical value selected from a certain numerical range may be used as a new upper limit or a new lower limit. For example, any numerical value from a certain numerical range may be combined with any numerical value described in another location of the present specification or in a table to set a new numerical range.

### (Positive Electrode Active Material)

A positive electrode active material according to the present embodiment is used in an active material layer of a positive electrode of a non-aqueous electrolyte secondary battery (hereinafter also called "a secondary battery") such as a lithium-ion battery, for example. The positive electrode active material includes a first active material, and a second active material having a greater average particle size than the first active material. Each of the first active material and the second active material is a lithium-(transition metal) composite oxide. The first active material is a single particle, or a secondary particle consisting of 2 to 10 primary particles aggregated together. The second active material is a secondary particle consisting of at least 50 primary particles aggregated together. The ratio of the average particle size (R) of the single particle or the primary particle of the first active material determined in a scanning electron microscope (hereinafter also called "SEM") image to the average particle size (D₁50) of the first active material (R/D₁50) is 0.80 or more. The intensity ratio (I₀₀₃/I₁₀₄) of diffraction peaks of the first active material obtained by an X-ray diffraction (hereinafter also called "XRD") method is 1.6 or more.

With the positive electrode active material including the first active material and the second active material, packing properties of the positive electrode active material in the active material layer can be enhanced, and, as a result, volumetric energy density of a positive electrode obtained by using the positive electrode active material can be enhanced. By using a single particle or a secondary particle consisting of 2 to 10 primary particles aggregated together as the first active material which has a relatively small average particle size, it is possible to enhance the cycling performance of the secondary battery.

Preferably, each of the first active material and the second active material is a lithium-(transition metal) composite oxide in which the content of Ni relative to the total number of moles of metallic element except Li (hereinafter also called "the Ni content") is from 50 to 70 mol %. The composition of the first active material may be the same as, or may be different from, the composition of the second active material.

The Ni content of the lithium-(transition metal) composite oxide may be from 52 to 68 mol %, or may be from 55 to 65 mol %, or may be from 55 to 60 mol %. The Ni content of the first active material may be higher than the Ni content of the second active material. When the Ni content of the first active material and that of the second active material independently fall within the above-mentioned ranges, a secondary battery with enhanced volumetric energy density can be obtained.

The lithium-(transition metal) composite oxide is simply required to include Li and Ni, and preferably, it includes at least Ni, Co, and Mn as its transition metal. The lithium-(transition metal) composite oxide may be a compound represented by the following formula (i), for example.

Li₁₋ₐNiₓMe₁₋ₓO₂ (i)

[In the formula (i),
-0.3≤a≤0.2, and 0.5≤x≤0.7, and
Me may include one or more selected from the group consisting of Co, Mn, Al, B, Zr, Ti, Mg, Fe, Cu, Zn, Sn, Na, K, Ba, Sr, Ca, W, Mo, Nb, and Si.]

In the formula (i), a may be -0.25≤a≤0.15, or may be -0.20≤a≤0.10. x may be 0.52≤x≤0.68, or may be 0.55≤x≤0.65, or may be 0.55≤x≤0.60. Me may include one or more selected from the group consisting of Co, Mn, Al, B, Zr, Ti, Mg, Mo, and Nb, and it preferably includes at least one of Co and Mn, and more preferably includes Co and Mn. The composition of the first active material and the second active material can be determined by ICP (high-frequency Inductively Coupled Plasma) emission spectrometry, for example.

As long as the object of the present disclosure is not impaired, the positive electrode active material may include another active material, in addition to the first active material and the second active material. This another active material may be a lithium-(transition metal) composite oxide in which the content of Ni is outside the above-mentioned range, or a compound that is not a lithium-(transition metal) composite oxide. This another active material may be a primary particle (a single particle), or may be a secondary particle.

### (First Active Material)

The first active material is a single particle, or a secondary particle consisting of 2 to 10 primary particles aggregated together. When the first active material is a secondary particle, the number of the primary particles aggregated together may be from 2 to 8, or may be from 2 to 5. With the positive electrode active material including the first active material which is a single particle or a secondary particle consisting of a small number of primary particles aggregated together, cycling performance of the secondary battery can be enhanced.

The ratio (R/D₁50) of the first active material is 0.80 or more, preferably 0.83 or more, more preferably 0.84 or more, and it may be 0.85 or more. The ratio (R/D₁50) may be from 0.80 to 1.0, or may be from 0.83 to 0.95, or may be from 0.84 to 0.92, or may be from 0.85 to 0.90. The ratio (R/D₁50) can be adjusted by changing the production conditions for the first active material described below, for example.

The ratio (R/D₁50) can be regarded as an index to indicate that the first active material is a single particle, and the higher the value is, the higher the content ratio of single particles is considered to be. On the other hand, the lower the ratio (R/D₁50) is, the higher the content ratio of aggregated particles (secondary particles) is considered to be, and the more likely the primary particles tend to be aggregated. When the particle size of the first active material is small, aggregation properties of the particles tend to affect the fluidity. Therefore, when the ratio (R/D₁50) falls within the above-mentioned range, fluidity of the first active material can be enhanced. As a result, packing properties of the positive electrode active material in the active material layer can be enhanced, and volumetric energy density of a positive electrode obtained by using the positive electrode active material can be enhanced.

The average particle size (R) may be from 1.7 to 6 µm, or may be from 2 to 5 µm, or may be from 2.5 to 4.5 µm, for example. The average particle size (R) is a value determined for a single particle or a primary particle of the first active material in an SEM image that is acquired by examining the surface of the first active material with an SEM; as described below in Examples, it is a value obtained by performing image analysis of SEM images of the surfaces of a plurality of first active materials to determine the longest diameter of a single particle or a primary particle of each first active material and then averaging the resulting values obtained for the plurality of first active materials.

The average particle size (D₁50) is preferably from 2 to 6 µm, and it may be from 3 to 5 µm, or may be from 4 to 5 µm. The average particle size (D50) herein is the particle size in volume-based particle size distribution at which cumulative frequency of particle sizes accumulated from the small size side reaches 50%, and the average particle size (D₁50) is the average particle size (D50) of the first active material. The volume-based particle size distribution can be measured with a particle size distribution analyzer.

The diffraction peak intensity ratio (I₀₀₃/I₁₀₄) of the first active material obtained by an XRD method is 1.6 or more, preferably 1.7 or more, and it may be 1.75 or more. The intensity ratio (I₀₀₃/I₁₀₄) may be from 1.6 to 2, or may be from 1.7 to 1.9, or may be from 1.75 to 1.85. The intensity ratio (I₀₀₃/I₁₀₄) of the first active material is an index of the isotropy of the crystal structure of crystallites in the first active material. It is conceivable that the higher the intensity ratio (I₀₀₃/I₁₀₄) is, the more nonisotropic the crystal structure of crystallites in the first active material is and the greater the region contributing to insertion and desertion of Li ions is. The diffraction peak intensities I₀₀₃ and I₁₀₄ of the first active material are the diffraction peak intensities for a (003) plane and a (104) plane, respectively, of the first active material measured by an XRD method, and can be measured by a method described below in Examples. The intensity ratio (I₀₀₃/I₁₀₄) can be adjusted by changing the production conditions for the first active material described below, for example.

By increasing the ratio (R/D₁50) of the first active material, it is possible to enhance the fluidity of the first active material, but due to the decrease of the content ratio of secondary particles each consisting of primary particles aggregated together, the specific surface area of the first active material tends to become smaller. When the specific surface area of the first active material becomes smaller, output properties of the secondary battery tend to be degraded. On the other hand, by setting the intensity ratio (I₀₀₃/I₁₀₄) of the first active material to fall within the above-mentioned range, it can be possible to increase the region contributing to insertion and desertion of Li ions, and thereby enhance output properties of the secondary battery.

The crystallite size L1 of the first active material is preferably from 900 to 1200 Å, and it may be from 950 to 1150 Å, or may be from 1000 to 1120 Å. The crystallite size L1 is calculated by substituting the value of full width at half maximum of the diffraction peak intensity I₁₀₄ of the first active material into the Scherrer equation.

The content of the first active material in the positive electrode active material, relative to the total mass of the positive electrode active material regarded as 100 mass%, may be from 20 to 80 mass%, and it may be from 30 to 70 mass%, and it may be from 40 to 60 mass%.

The first active material can be produced by a production method that comprises, for example, a first calcination step of calcining a first mixture including a lithium compound and a transition-metal-containing compound to obtain a calcined product, and a second calcination step of calcining a second mixture including the calcined product and a metal-containing compound. The method of producing the first active material may comprise a step of disintegrating the calcined product obtained in the first calcination step or the second calcination step.

As the lithium compound, one or more from lithium hydroxide, lithium carbonate, lithium nitrate, lithium acetate, lithium oxide, lithium chloride, lithium fluoride, and the like may be mentioned. As the transition-metal-containing compound, a composite oxide or a composite hydroxide that contains a transition metal such as Ni, Co, and Mn among the metallic elements represented by Me in the above-mentioned formula (i) may be mentioned. Preferably, the content of Li in the first mixture is from 0.7 to 1.2 mol % relative to the total number of moles of metallic element in the first mixture.

The calcination temperature in the first calcination step is preferably from 700 to 1000°C, and the calcination time in the first calcination step is preferably from 3 to 7 hours.

As the metal-containing compound, an oxide or a hydroxide that contains a metallic element represented by Me in the formula (i) may be mentioned, and, preferably, an oxide or a hydroxide that contains a metallic element other than transition metals, such as Al and B, may be mentioned. The metal-containing compound may be an oxide or a hydroxide that contains a metallic element including a transition metal.

The calcination temperature in the second calcination step is preferably from 300 to 600°C, and the calcination time in the second calcination step is preferably from 3 to 10 hours.

By adjusting, for example, the calcination conditions in the first calcination step and the second calcination step, and/or the conditions for disintegrating the calcined product obtained in the first calcination step or the second calcination step, it is possible to adjust the ratio (R/D₁50) and the intensity ratio (I₀₀₃/I₁₀₄) of the first active material, and the like.

### (Second Active Material)

The second active material is a secondary particle consisting of at least 50 primary particles aggregated together. In the second active material, the number of the primary particles aggregated together may be 100 or more, or may be 1000 or more, or may be 10000 or more, and it is usually 5×10⁶ or less, and it may be 5×10⁵ or less.

The average particle size (D₂50) of the second active material is preferably from 12 to 20 µm, and it may be from 13 to 19 µm, or may be from 14 to 18 µm.

The ratio of the average particle size (D₁50) of the first active material to the average particle size (D₂50) of the second active material (D₁50:D₂50) is preferably from 1:2 to 1:10, and it may be from 1:3 to 1:8, or may be from 1:3.5 to 1:7, or may be from 1:3.5 to 1:8. When the ratio (D₁50:D₂50) falls within the above-mentioned range, packing properties of the positive electrode active material in the active material layer can be enhanced and volumetric energy density of the positive electrode can be enhanced.

The specific surface area (BET) of the second active material is preferably from 0.13 to 0.27 m²/g, and it may be from 0.15 to 0.25 m²/g, or may be from 0.17 to 0.23 m²/g. The specific surface area can be measured with a specific surface area analyzer. When the specific surface area of the second active material falls within the above-mentioned range, output properties of the secondary battery tend to be enhanced.

The crystallite size L2 of the second active material is preferably from 400 to 900 Å, and it may be from 500 to 880 Å, or may be from 600 to 850 Å. The crystallite size L2 is calculated by substituting the value of full width at half maximum of the diffraction peak intensity I₁₀₄ of the second active material into the Scherrer equation.

The content of the second active material in the positive electrode active material, relative to the total mass of the positive electrode active material regarded as 100 mass%, may be from 20 to 80 mass%, and it may be from 30 to 70 mass%, and it may be from 40 to 60 mass%.

The second active material can be produced by, for example, a two-stage sintering step as described for the method of producing the first active material. By adjusting the sintering conditions and/or the disintegration conditions, it is possible to obtain a second active material having the above-mentioned properties.

### (Non-Aqueous Electrolyte Secondary Battery)

A non-aqueous electrolyte secondary battery according to the present embodiment (hereinafter also called "the present battery") comprises a positive electrode, and the positive electrode has an active material layer including the above-mentioned positive electrode active material. Therefore, packing properties of the positive electrode active material in the active material layer can be enhanced, and volumetric energy density of the positive electrode can be enhanced, and, also, output properties of the present battery can be enhanced.

Usually, the present battery includes an electrode assembly that includes the positive electrode, as well as a non-aqueous electrolyte solution. The present battery may have a battery case for accommodating the electrode assembly and the non-aqueous electrolyte solution. The battery case can include an exterior package having an opening, and a sealing plate for sealing the opening. Each of the exterior package and the sealing plate can be formed with a metal such as, for example, Al, Al alloy, iron, or iron alloy, and, for example, it can be formed by using an Al-laminated film. Between the electrode assembly and the exterior package, a resin sheet may be provided as an electrode holder.

The electrode assembly may include the positive electrode, a negative electrode, and a separator. In the electrode assembly, the active material layer of the positive electrode faces a negative electrode active material layer of the negative electrode, with the separator interposed therebetween. The electrode assembly may be a stack-type one that is formed by stacking the positive electrode, the negative electrode, and the separator, or may be a wound-type one that is formed by stacking the positive electrode, the negative electrode, and the separator and winding the resulting stack.

The positive electrode has a positive electrode current collector and an active material layer including the above-mentioned positive electrode active material, and the active material layer is present on the positive electrode current collector. The active material layer is formed on one side or both sides of the positive electrode current collector. The positive electrode current collector is a metal foil that is made by using an Al material such as Al and Al alloy, for example, and the metal foil is not particularly limited as long as it is stable at the electric potential range of the positive electrode.

The active material layer can be formed by, for example, applying a composite material to the positive electrode current collector, drying, and compression. The composite material can be prepared by adding a solvent such as N-methyl-2-pyrrolidone (NMP) to an active-material-layer-forming material such as the positive electrode active material, a binder, and a conductive material, and mixing and kneading the resultant.

In addition to the above-mentioned positive electrode active material, the active material layer may include a binder, a conductive material, and the like. The binder may be a known material, such as, for example, a fluororesin such as polyvinylidene difluoride (PVdF) and polytetrafluoroethylene (PTFE) and a cellulose-based resin such as carboxymethylcellulose (CMC). The conductive material may be a carbon material, for example. The carbon material may be one or more selected from the group consisting of fibrous carbon, carbon black, coke, and activated carbon, for example. The fibrous carbon may be carbon nanotubes (CNTs), for example.

Usually, the negative electrode has a negative electrode current collector, as well as a negative electrode active material layer formed on one side or both sides of the negative electrode current collector. The negative electrode current collector is a metal foil that is made by using a copper material such as copper and copper alloy, for example. The negative electrode active material layer includes a negative electrode active material, and it may further include a conductive material, a binder, and the like.

The negative electrode active material may be a known material, and examples thereof include carbon-based active material particles such as graphite, metal-based active material particles that include an element selected from the group consisting of Si, Sn, Sb, Bi, Ti, and Ge, and the like. Examples of the conductive material include those mentioned above. Examples of the binder include cellulose-based resins such as CMC, methylcellulose (MC), and hydroxypropylcellulose; polyacrylic acid; styrenebutadiene rubber (SBR); and the like. CMC may also be used as a thickener.

The separator has a monolayered or multilayered base material, and on at least one side of the base material, it may have a functional layer. The base material may be a porous sheet such as a film and/or a nonwoven fabric, which is made of a resin such as polyolefin (such as polyethylene and polypropylene), polyester, cellulose, polyamide, and/or the like. The functional layer may be an adhesive layer and/or a heat-resistant layer, for example. The adhesive layer can be formed with an adhesive agent, for example. The heat-resistant layer can include a filler and a binder, for example.

The non-aqueous electrolyte solution is preferably obtained by adding an electrolyte to a non-aqueous solvent such as an organic solvent. Examples of the electrolyte include one or more from LiPF₆, LiBF₄, LiClO₄, LiFSO₃, LiBOB, and the like. Examples of the non-aqueous solvent include one or more from ethylene carbonate (EC), ethyl methyl carbonate (EMC), dimethyl carbonate (DMC), propylene carbonate (PC), butylene carbonate (BC), diethyl carbonate (DEC), and the like. The non-aqueous electrolyte solution may further include an additive such as vinylene carbonate (VC), vinylethylene carbonate (VEC), and/or fluoroethylene carbonate.

### [Examples]

In the following, the present disclosure will be described in further detail by way of Examples and Comparative Examples.

### [Measurement of Average Particle Size (D₁50 and D₂50) of Active Material]

The average particle size of the first active material and the second active material (D₁50 and D₂50) was measured with a particle size distribution analyzer (manufactured by Malvern Panalytical, Mastersizer-3000).

### [Measurement of Average Particle Size (R) of First Active Material and Calculation of Ratio (R/D₁50)]

With a scanning electron microscope (SEM), an SEM image of the particle surface of first active material was obtained. With image analysis software Mac-View (manufactured by MOUNTECH), 10 or more first active materials were randomly selected in the SEM image; in the case when the first active material was a secondary particle, the contour of the primary particle was identified, and for all the primary particles of the first active material, the length of a portion of each primary particle where the diameter was the largest was determined (the longest length), and, then, the average value of the longest lengths of all the primary particles was regarded as the longest diameter of the first active material. In the case when the first active material was a single particle, the contour of the single particle was identified and then the longest diameter was determined, which was regarded as the longest diameter of the first active material. The longest diameters of the selected 10 or more first active materials thus determined were averaged, and the resultant was regarded as the average particle size (R) of the first active material. From the average particle size (R) of the first active material and the average particle size (D₁50) obtained in the above-described manner, the ratio (R/D₁50) was calculated.

### [Calculation of Diffraction Peak Intensity Ratio (I₀₀₃/I₁₀₄) and Crystallite Sizes L1 and L2]

With the use of a fully-automatic multipurpose X-ray diffractometer (manufactured by Rigaku, SmartLab) equipped with a vacuum tube (target element, Cu) and set at a tube voltage of 45 kV and a tube current of 200 mA, XRD measurement of the first active material filled in a specifically-designed holder was performed by a reflection method. In an XRD profile obtained by the XRD measurement, from the intensity I₀₀₃ of a diffraction peak for a (003) plane observed at 2θ=18 to 19° and the intensity I₁₀₄ of a diffraction peak for a (104) plane observed at 20=44 to 45°, the intensity ratio (I₀₀₃/I₁₀₄) was calculated.

The value of full width at half maximum (FWHM) of the diffraction peak intensity I₁₀₄ thus obtained was substituted into the Scherrer equation to calculate the crystallite size L1 of the first active material. In the same manner, XRD measurement of the second active material was performed, and from the diffraction peak intensity I₁₀₄, the crystallite size L2 was calculated.

### [Measurement of Specific Surface Area of Second Active Material]

With a specific surface area analyzer (manufactured by MOUNTECH, Macsorb HM model-1208), the specific surface area of the second active material was measured.

### [Examples 1 and 2, Comparative Examples 1 to 4]

### (Preparation of Positive Electrode)

As a first active material, a lithium-(transition metal) composite oxide was prepared, which had the average particle size (D₁50), the average particle size ratio (R/D₁50), the intensity ratio (I₀₀₃/I₁₀₄), and the crystallite size L1 shown in Table 1 and included at least Ni, Co, and Mn at Ni:Co:Mn=60:20:20 (mol% ratio). The first active material was a single particle or a secondary particle consisting of 2 to 5 primary particles aggregate together.

As the second active material, a lithium-(transition metal) composite oxide was prepared, which had the average particle size (D₂50), the specific surface area (BET), and the crystallite size L2 shown in Table 1 and included at least Ni, Co, and Mn at Ni:Co:Mn=55:20:25 (mol% ratio). The second active material was a secondary particle consisting of at least 100 primary particles aggregated together.

50 parts by mass of the first active material and 50 parts by mass of the second active material were mixed together, and thereby a positive electrode active material was obtained. 97.5 parts by mass of the positive electrode active material, 1.5 parts by mass of carbon black as a conductive material, and 1.0 part by mass of PVdF as a binder were mixed together, and thereto, a proper amount of NMP as a solvent was added, and thereby a slurry-form composite material was prepared. The resulting composite material was applied to an aluminum foil sheet as a positive electrode current collector, dried, and rolled with a roller to form an active material layer, which was then cut into the size of an electrode and thereto, an aluminum tab was attached, to obtain a positive electrode.

### (Preparation of Negative Electrode)

98 parts by mass of a negative electrode active material, 1 part by mass of CMC as a thickener, and 1 part by mass of SBR as a binder were dispersed in water, and thereby a slurry-form negative electrode composite material was prepared. The resulting negative electrode composite material was applied to a copper foil sheet as a negative electrode current collector, dried, and rolled with a roller to form a negative electrode active material layer, which was then cut into the size of an electrode and thereto, a nickel tab was attached, to obtain a negative electrode.

### (Preparation of Non-Aqueous Electrolyte Secondary Battery)

The positive electrode and the negative electrode prepared in the above-described manner were stacked on top of one another with a separator made of polyolefin interposed therebetween, and thereby a stack-type electrode assembly was obtained. The resulting stack-type electrode assembly was placed inside a battery case made of an aluminum-laminated sheet, and a non-aqueous electrolyte solution was injected into it, followed by sealing the opening of the battery case, and thereby a secondary battery was obtained as a test cell. The non-aqueous electrolyte solution was prepared by adding, to a mixed solvent of EC and EMC (EC:EMC=30:70 in volume), LiPF₆ as an electrolyte at a concentration of 1 mol/L, and adding vinylene carbonate at 0.3 mass% relative to the mass of the mixed solvent.

### [Evaluation of Fluidity of First Active Material]

The fluidity of the first active material was evaluated by measuring the angle of repose of the first active material with the use of a powder tester, PT-X (manufactured by Hosokawa Micron). Results are shown in Table 1.

### [Evaluation of Output Properties of Test Cell]

Output properties of the test cell were evaluated by measuring, at 25°C, the internal resistance (DCIR) of the test cell prepared in the above-described manner, at the time when the charging ratio (SOC) of the test cell was 50% (when the charged capacity was 50% of the initial discharged capacity). Results are shown in Table 1.

**[Table 1]**

| | | Example | | Comparative Example | | | |
|---|---|---|---|---|---|---|---|
| | | 1 | 2 | 1 | 2 | 3 | 4 |
| First active material | | | | | | | |
| | D₁50 [µm] | 4.2 | 4.0 | 4.2 | 4.0 | 3.8 | 4.0 |
| | Average particle size ratio (R/D₁50) | 0.86 | 0.84 | 0.86 | 0.74 | 0.56 | 0.85 |
| | I₀₀₃/I₁₀₄ | 1.83 | 1.76 | 1.51 | 1.80 | 1.42 | 1.31 |
| | Crystallite size L1 [Å] | 1020 | 1108 | 1098 | 1050 | 1002 | 1040 |

| Second active material | | | | | | | |
|---|---|---|---|---|---|---|---|
| | D₂50 [µm] | 16.6 | 16.6 | 16.6 | 16.6 | 16.6 | 16.6 |
| | Specific surface area (BET) [m²/g] | 0..20 | 0.20 | 0.20 | 0.20 | 0.20 | 0.20 |
| | Crystallite size L2 [Å] | 798 | 798 | 798 | 798 | 798 | 798 |
| D₁50:D₂50 | | 1:4.0 | 1:4.2 | 1:4.0 | 1:4.2 | 1:4.4 | 1:4.2 |
| Angle of repose of first active material [°] | | 40 | 42 | 40 | 58 | 59 | 40 |
| Internal resistance of test cell [Ω] | | 0.078 | 0.075 | 0.083 | 0.076 | 0.084 | 0.085 |

Referring to Table 1, in Examples 1 and 2, the angle of repose of the first active material is 45° or less and the internal resistance of the test cell is 0.080 Q or less. From this, it is indicated that by controlling the average particle size ratio (R/D₁50) and the diffraction peak intensity ratio (I₀₀₃/I₁₀₄) of the first active material, it is possible to enhance output properties of the test cell while enhancing fluidity of the first active material in the positive electrode active material.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A positive electrode active material comprising:
a first active material; and
a second active material having a greater average particle size than the first active material, wherein
each of the first active material and the second active material is a lithium-(transition metal) composite oxide,
the first active material is a single particle, or a secondary particle consisting of 2 to 10 primary particles aggregated together,
the second active material is a secondary particle consisting of at least 50 primary particles aggregated together,
a ratio (R/D₁50) of an average particle size (R) of the single particle or the primary particle of the first active material determined in a scanning electron microscope image to an average particle size (D₁50) of the first active material is 0.80 or more, and
an intensity ratio (I₀₀₃/I₁₀₄) of diffraction peaks of the first active material obtained by an X-ray diffraction method is 1.6 or more.

2. The positive electrode active material according to claim 1, wherein the ratio (R/D₁50) is 0.84 or more.

3. The positive electrode active material according to claim 1 or 2, wherein the intensity ratio (I₀₀₃/I₁₀₄) is 1.7 or more.

4. The positive electrode active material according to any one of claims 1 to 3, wherein the average particle size (D₁50) of the first active material is from 2 to 6 µm.

5. The positive electrode active material according to any one of claims 1 to 4, wherein an average particle size (D₂50) of the second active material is from 12 to 20 µm.

6. The positive electrode active material according to any one of claims 1 to 5, wherein a ratio of the average particle size (D₁50) of the first active material to an average particle size (D₂50) of the second active material (D₁50:D₂50) is from 1:2 to 1:10.

7. The positive electrode active material according to any one of claims 1 to 6, wherein a specific surface area of the second active material is from 0.13 to 0.27 m²/g.

8. The positive electrode active material according to any one of claims 1 to 7, wherein each of the first active material and the second active material is a lithium-(transition metal) composite oxide including Ni at 50 to 70 mol % relative to a total number of moles of metallic element except Li.

9. A non-aqueous electrolyte secondary battery comprising:
a positive electrode, wherein
the positive electrode has an active material layer including the positive electrode active material according to any one of claims 1 to 8.
